# EUROPÄISCHE PATENTSCHRIFT

(11) **EP 1 091 999 B1**
(45) Veröffentlichungstag und Bekanntmachung des Hinweises auf die Patenterteilung: **29.05.2002**
(21) Anmeldenummer: 99929213.9
(22) Anmeldetag: 15.06.1999
(51) Int. Cl.: C08L 59/02, C08K 3/34, C08K 13/02, C08K 5/103

(54) **STABILISIERTE POLYOXYMETHYLEN-FORMMASSEN**
STABILIZED POLYOXYMETHYLENE MOULDING MATERIALS
MATIERES DE MOULAGE A BASE DE POLYOXYMETHYLENE STABILISEES

(30) Priorität: 27.06.1998 DE 19828797
(43) Veröffentlichungstag der Anmeldung: 18.04.2001
(73) Patentinhaber: BASF AKTIENGESELLSCHAFT, 67056 Ludwigshafen (DE)
(72) Erfinder: EBERLE, Wolfgang, D-67071 Ludwigshafen (DE); DAMES, Burkhardt, D-67069 Ludwigshafen (DE)
(86) Internationale Anmeldenummer: EP9904121
(87) Internationale Veröffentlichungsnummer: WO0000547

(56) Entgegenhaltungen:
- EP-A- 0 052 740
- EP-A- 0 465 086
- DE-A- 3 628 560
- DE-A- 3 628 561
- PATENT ABSTRACTS OF JAPAN vol. 199, no. 612, 26. Dezember 1996 (1996-12-26) & JP 08 199039 A (ASAHI CHEM IND CO LTD), 6. August 1996 (1996-08-06)

## Beschreibung

Die Erfindung betrifft thermoplastische Polyoxymethylen-Formmassen, enthaltend als wesentliche Komponenten
A) 10 bis 99,98 Gew.-% eines Polyoxymethylenhomo- oder copolymerisats
B) 0,005 bis 2 Gew.-% eines sterisch gehinderten Phenols
C) 0,001 bis 2 Gew.-% eines Polyamids
D) 0,002 bis 2 Gew.-% eines Erdalkalisilikates oder eines Erdalkaliglycerophosphates
E) 0,01 bis 5 Gew.-% mindestens eines Esters oder Amids gestättigter oder ungesättigter aliphatischer Carbonsäuren mit 10 bis 40 C-Atomen mit Polyolen oder aliphatischen gesättigten Alkoholen oder Aminen mit 2 bis 40 C-Atomen oder einem Ether, der sich von Alkoholen und Ethylenoxid ableitet
F) 0 bis 5 Gew.-% eines Melamin-Formaldehyd-Kondensates
G) 0 bis 74 Gew.-% weiterer Zusatzstoffe, wobei die Summe der Gewichtsprozente der Komponenten A) bis G) jeweils 100 % ergibt.

Weiterhin betrifft die Erfindung die Verwendung derartiger Formmassen zur Herstellung von Formkörpern jeglicher Art und die hierbei erhältlichen Formkörper.

Polyoxymethylenhomo und/oder -copolymerisate sind seit langem bekannt. Die Polymerisate zeichnen sich durch eine Anzahl ausgezeichneter Eigenschaften aus, so daß sie für die verschiedensten technischen Anwendungen geeignet sind. Dennoch hat es nicht an Versuchen gefehlt, Mittel zur Verbesserung der Verarbeitbarkeit, z.B. der Fließfähigkeit, Erstarrungszeit u.a. und/oder zur Verbesserung der mechanischen Eigenschaften sowie der Dimensionsstabilität von aus derartigen Polymerisaten hergestellten Formkörpern zu finden.

Nach Angaben der DE-A-23 19 359 zeichen sich Formmassen, die bestehen aus 98 bis 25 Gew.-% Oxymethylencopolymerisaten und 2 bis 75 Gew.-% nadelförmigem Calciummetasilikat, wobei die Gew.-% bezogen sind auf die Gesamtmasse, durch eine verbesserte Verarbeitbarkeit, Maßhaltigkeit und Wärmealterungseigenschaften aus.

Zum Stande der Technik gehört ferner, Polyoxymethylen-Formmassen durch geeignete Additive zu stabilisieren. Zu diesem Zwecke werden Polyoxymethylen-Formmassen Antioxidanten, wie z.B. sterisch gehinderte Phenolderivate zugesetzt. Derartige Phenolderivate sind z.B. in der DE-A-27 02 661 zusammengestellt. Aus der EP-A-19 761 sind glasfaserverstärkte Polyoxymethylen-Formmassen bekannt, welche zur Verbesserung der Schlagzähigkeit Alkoxymethylmelamine enthalten. Polyoxymethylen-Formmassen, die gegen die Einwirkung von Wärme im Temperaturbereich von 100 bis 150°C über einen längeren Zeitraum stabilisiert sind, sind aus der EP-A-52 740 bekannt, welche den Zusatz eines teilveretherten speziellen Melamin-Formaldehyd-Kondensationsproduktes beschreibt. Die DE-A-3 011 280 beschreibt stabilisierte Oxymethylencopolymermassen, die als Stabilisator eine Mischung aus mindestens einem aminosubstituierten Triazin, mindestens einem sterisch gehinderten Phenol und mindestens einer metallhaltigen Verbindung enthalten. Die metallhaltigen Verbindungen bestehen vorzugsweise aus Kalium-, Calcium-, Magnesiumhydroxid oder Magnesiumcarbonat.

Trotz dieser Maßnahmen besitzen bekannte Polyoxymethylen-Formmassen jedoch für einige Anwendungen eine nicht ausreichende thermische Stabilität, die die Verarbeitung zu Formkörpern nachteilig beeinflußt und beispielsweise zu Ablagerungen am Formwerkzeug oder zur Verschlechterung der Entformbarkeit beitragen und/oder beim späteren Gebrauch der Formkörper zu Verfärbungen und Verminderung der mechanischen Eigenschaften führt. Nachteilig ist ferner, daß die Mischungen noch Formaldehydadukte enthalten können, welche bei der Verarbeitung bei erhöhten Temperaturen durch Formaldehydabspaltung zu Geruchsbelästigung führen können.

Aus den DE-A 36 28 560, DE-A 36 28 561 und DE-A 36 28 562 sind Polyoxymethylen-Formmassen bekannt, die als Stabilsatoren eine Mischung aus sterisch gehinderten Phenolen und Erdalkalisilikaten und Eralkaliglycerophosphaten enthalten. Ausweislich der Beschreibung können als weitere Costabilisatoren auch Polyamide eingesetzt werden. Diese Massen weisen zwar eine relativ gute Thermostabilität auf, sind jedoch hinsichtlich der Farbqualität noch verbesserungswürdig.

Der vorliegenden Erfindung lag daher die Aufgabe zugrunde, Polyoxymethylen-Formmassen zur Verfügung zu stellen, welche eine bessere thermische Stabilität bei Verarbeitung und erhöhter Gebrauchstemperatur aufweisen. Gleichzeitig soll eine bessere Farbkonstanz und dauerhafte Helligkeit der Farbe erzielt werden. Formbelag und Formaldehydemission sollen möglichst weitesgehend bei der Verarbeitung minimiert werden.

Demgemäß wurden die eingangsdefinierten Formmassen gefunden. Bevorzugte Ausführungsformen sind den Unteransprüchen zu entnehmen.

Als Komponente A) enthalten die erfindungsgemäßen Formmassen 10 bis 99,98, vorzugsweise 30 bis 99 Gew.-% und insbesondere 40 bis 98 Gew.-% eines Polyoxymethylenhomo- oder -copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂O- noch bis zu 50, vorzugsweise 0,1 bis 20, insbesondere 0,3 bis 10 mol-% und ganz besonders bevorzugt 2 bis 6 mol-% an wiederkehrenden Einheiten enthalten 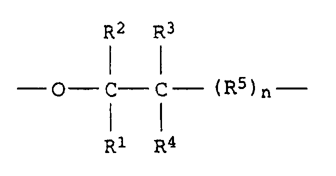 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁-bis C₄-Alkyl- oder C₁-bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 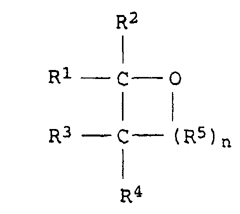 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 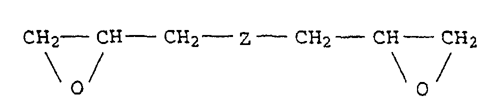 und/oder 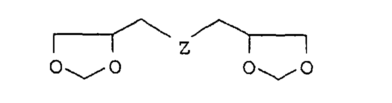 wobei Z eine chemische Bindung, -O-, -ORO- (R= C₁-bis C₈-Alkylen oder C₂-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1, 2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als sterisch gehinderte Phenole B) eignen sich prinzipiell alle Verbindungen mit phenolischer Struktur, die am phenolischen Ring mindestens eine sterisch anspruchsvolle Gruppe aufweisen.

### Vorzugsweise kommen z.B. Verbindungen der Formel

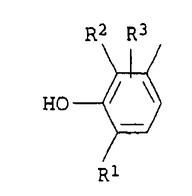

in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 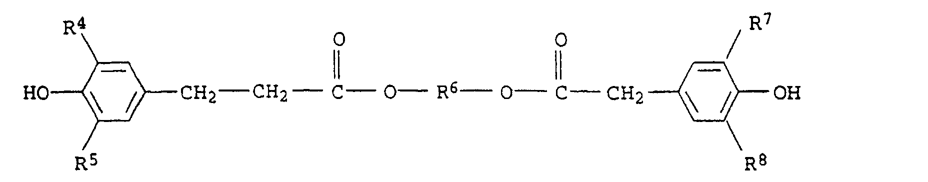 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formen entsprechen, sind 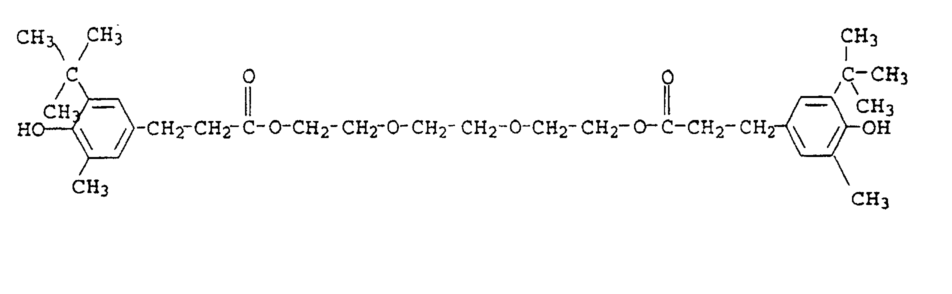 (Irganox® 245 der Firma Ciba-Geigy) 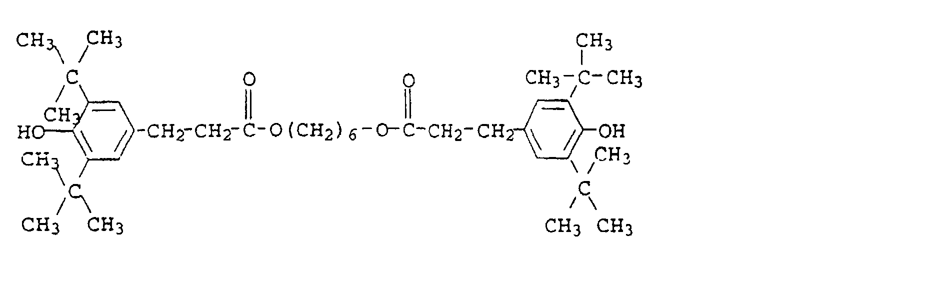 (Irganox® 259 der Firma Ciba-Geigy)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythryl-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-ditert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3' ,5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin und N,N'-Hexamethylen-bis-3,5-di-tert.-butyl-4-hydroxyhydrocinnamid.

Als besonders wirksam erwiesen haben sich und daher vorzugsweise verwendet werden 2,2'-Methylen-bis-(4-methyl-6-tert.-butylphenol), 1,6-Hexandiol-bis-3(3,5-di-tert.-butyl-4-hydroxyphenyl)-propionat (Irganox® 259), Pentaerythrityl-tetrakis-[3-(3,5-di-tert.-butyl-4-hydroxyphenyl)-propionat] und das vorstehend beschriebene Irganox® 245 der Firma Ciba Geigy, das besonders gut geeignet ist.

Die Antioxidantien (B), die einzeln oder als Gemische eingesetzt werden können, sind in einer Menge von 0,005 bis 2 Gew.-%, vorzugsweise von 0,05 bis 2 Gew.-%, insbesondere 0,1 bis 1 Gew.-%, bezogen auf das Gesamtgewicht der Formmassen A) bis G) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Die als Komponenten C) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc., 1988, beschreiben werden, können eingesetzt werden, wobei der Schmelzpunkt des Polyamids vorzugsweise unter 225°C, vorzugsweise unter 215°C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. Polycaprolactam oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Firma Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt von 0,001 bis zu 2 Gew.-%, vorzugsweise 0,005 bis 1,99 Gew.-%, bevorzugt 0,01 bis 0,08 Gew.-%.

Durch die Mitverwendung eines Polykondensationsprodukts aus 2,2-Di-(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Firma Shell). Das Molekulargewicht der Polykondensate kann in weiten Grenzen variieren; prinzipiell sind die im Handel erhältlichen Typen sämtlich geeignet.

Als Komponente D) enthalten die erfindungsgemäßen Polyoximethylen-Formmassen 0,002 bis 2,0 Gew.-%, vorzugsweise 0,005 bis 0,5 Gew.-% und insbesondere 0,01 bis 0,3 Gew.-%, bezogen auf das Gesamtgewicht der Formmassen eines oder mehrerer der Erdalkalisilikate und/oder Erdalkaliglycerophosphate. Als Erdalkalimetalle zur Bildung der Silikate und Glycerophosphate haben sich vorzugsweise Calcium und insbesondere Magnesium vorzüglich bewährt. Anwendung finden zweckmäßgerweise Calciumglycerophosphat und vorzugsweise Magnesiumglycerophosphat und/oder Calciumsilikat und vorzugsweise Magnesiumsilikat, wobei als Erdalkalisilikate, insbesondere solche bevorzugt sind, die durch die Formel

Me · x SiO₂ · n H₂O

beschrieben werden, in der bedeuten
- Me: ein Erdalkalimetall, vorzugsweise Calcium oder insbesondere Magnesium,
- x: eine Zahl von 1,4 bis 10, vorzugsweise 1,4 bis 6 und
- n: eine Zahl gleich oder größer als 0, vorzugsweise 0 bis 8.

Die Verbindungen D) werden vorteilhafterweise in feingemahlener Form eingesetzt. Produkte mit einer durchschnittlichen Teilchengröße von kleiner als 100 µm, vorzugsweise von kleiner als 50 µm sind besonders gut geeignet.

Bevorzugte Calcium- und Magnesiumsilikate und/oder Calcium- und Magnesiumglycerphosphate können beispielsweise druch die folgenden Kenndaten näher spezifiziert werden:
Calcium- bzw.- Magnesiumsilikat:
   Gehalt an CaO bzw. MgO: 4 bis 32 Gew.-%, vorzugsweise 8 bis 30 Gew.-% und insbesondere 12 bis 25 Gew.-%,
   Verhältnis SiO₂ : CaO bzw. SiO₂ : MgO (mol/mol) : 1,4 bis 10, vorzugsweise 1,4 bis 6 und insbesondere 1,5 bis 4,
   Schüttgewicht: 10 bis 80 g/100 ml, vorzugsweise 10 bis 40 g/100 ml und durchschnittliche Korngröße: kleiner als 100 µm, vorzugsweise kleiner als 50 µm und
Calcium- bzw. Magnesiumglycerophosphate:
   Gehalt an CaO bzw. MgO: größer als 70 Gew.-%, vorzugsweise größer als 80 Gew.-%
   Glührückstand: 45 bis 65 Gew.-%
   Schmelzpunkt: größer als 300°C und
   durchschnittliche Korngröße: kleiner als 100 µm, vorzugsweise kleiner als 50 µm.

Als Komponente E) enthalten die erfindungsgemäßen Formmassen 0,01 bis 5, vorzugsweise 0,09 bis 2 und insbesondere 0,1 bis 0,7 mindestens eines Esters oder Amids gesättigter oder ungesättigter aliphatischer Carbonsäuren mit 10 bis 40 C-Atomen bevorzugt 16 bis 22 C-Atomen mit Polyolen oder aliphatischen gesättigten Alkoholen oder Aminen mit 2 bis 40 C-Atomen bevorzugt 2 bis 6 C-Atomen oder einem Ether, der sich von Alkoholen und Ethylenoxid ableitet.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung aus Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, G1ycerinmonopalmittat, Glycerintrilautat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weiterhin geeignet sind Polyetherpolyole oder Polyesterpolyole, welche mit ein- oder mehrwertigen Carbonsäuren, vorzugsweise Fettsäuren verestert bzw. verethert sind. Geeignete Produkte sind im Handel beispielsweise als Loxiol® EP 728 der Firma Henkel KGaA erhältlich.

Bevorzugte Ether, welche sich von Alkoholen und Ethylenoxid ableiten, weisen die allgemeine Formel

RO (CH₂ CH₂ O)ₙ H

auf, in der R eine Alkylgruppe mit 6 bis 40 Kohlenstoffatomen und n eine ganze Zahl größer/gleich 1 bedeutet.
Insbesondere bevorzugt für R ist ein gesättigter C₁₆ bis C₁₈ Fettalkohol mit n ≈ 50, welcher als Lutensol® AT 50 der Firma BASF im Handel erhältlich ist.

Als Komponente F) können die erfindungsgemäßen Formmassen 0 bis 5, bevorzugt 0,001 bis 5 Gew.-%, vorzugsweise 0,01 bis 3 Gew.-% und insbesondere 0,05 bis 1 Gew.-% eines Melamin-Formaldehyd-Kondensates enthalten. Vorzugsweise ist dieses ein Fällungskondensat in feinteiliger Form, welches vernetzt und wasserunlöslich ist. Das Molverhältnis Formaldehyd zu Melamin beträgt vorzugsweise 1,2:1 bis 10:1, insbesondere 1,2:1 bis 2:1. Aufbau und Verfahren zur Herstellung derartiger Kondensate sind der DE-A 25 40 207 zu entnehmen.

Als Komponente G) können die erfindungsgemäßen Formmassen 0 bis 74 Gew.-%, vorzugsweise 0 bis 50 Gew.-% und insbesondere 0 bis 40 Gew.-% weitere Zusatzstoffe enthalten.

Als Komponente G) können die erfindungsgemäßen Formmassen 0,0001 bis 1 Gew.-%, vorzugsweise 0,001 bis 0,8 Gew.-% und insbesondere 0,01 bis 0,3 Gew.-% eines Nukleierungsmittels, welches verschieden von D) und E) ist, enthalten.

Als Nukleierungsmittel kommen alle bekannten Verbindungen in Frage, beispielsweise Melamincyanurat, Borverbindungen wie Bornitrid, Kieselsäure, Pigmente wie z.B. Heliogenblau® (Kupferphthalocyaninpigment; eingetragenes Warenzeichen der BASF Aktiengesellschaft) oder verzweigte Polyoxymethylene, welche in diesen geringen Mengen eine nukleierende Wirkung zeigen.

Insbesondere wird als Nukleierungsmittel Talkum verwendet, welches ein hydratisiertes Magnesiumsilikat der Zusammensetzung Mg₃[(OH)₂/Si₄O_{10] oder MgO} · 4 SiO₂ · H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na, und K anwesend sein, wobei die OH-Gruppe teilweise durch Fluorid ersetzt sein kann.

Besonders bevorzugt wird Talkum eingesetzt, dessen Teilchengrößen zu 100 % < 20 µm beträgt. Die Teilchengrößenverteilung wird üblicherweise durch Sedimentationsanalyse bestimmt und beträgt vorzugsweise:

| | |
|---|---|
| < 20 µm | 100 Gew.-% |
| < 10 µm | 99 Gew.-% |
| < 5 µm | 85 Gew.-% |
| < 3 µm | 60 Gew.-% |
| < 2 µm | 43 Gew.-% |

Derartige Produkte sind im Handel als Micro-Talc I.T. extra (Fa. Norwegian Talc Minerals) erhältlich.

Als Füllstoffe (welche verschieden von D) sind) in Mengen bis zu 50 Gew.-%, vorzugsweise 5 bis 40 Gew.-% seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Calciumcarbonat oder Glaskugeln, vorzugsweise in gemahlener Form oder Mischungen dieser Füllstoffe.

Als weitere Zusatzstoffe seien, in Mengen bis zu 50, vorzugsweise 0 bis 40 Gew.-%, schlagzäh modifizierende Polymere (im folgenden auch als kautschukelastische Polymerisate oder Elastomere bezeichnet) genannt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen. 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl (meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 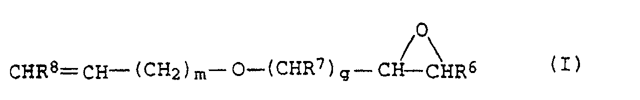 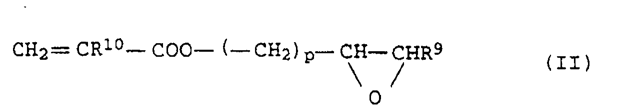 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen, insbesondere 0,3 bis 20 Gew.-% Glycidylacrylat und/oder
- 0 bis 40,: insbesondere 0,1 bis 20 Gew.-% Glycidylmethacrylat, und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Aminooder Amidgruppen sowie funktionelle Gruppen, die durch Mitverwendung von Monomeren der allgemeinen Formel 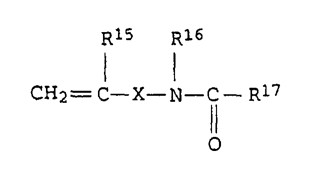 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR₁₈
- _{R}18: eine C₁- bis Cg-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

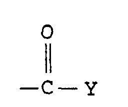

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomeren; für nähere Einzelheiten sei hier beispielsweise auf die US-PS 4 148 846 verwiesen.

Im allgemeinen beträgt der Anteil dieser vernetzenden Monomeren an der Komponente G) bis zu 5 Gew.-%, vorzugsweise nicht mehr als 3 Gew.-%, bezogen auf G).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)-acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere D) können auch nach anderen üblichen Verfahren, z.B. durch Suspensionspolymerisation, hergestellt werden.

Als weitere geeignete Elastomere seien thermoplastische Polyurethane genannt, wie sie beispielsweise in der EP-A 115 846 und EP-A 115 847 sowie EP-A 117 664 beschrieben sind.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger), Weichmacher, Haftvermittler und Pigmente genannt. Der Anteil solcher Zusätze liegt im allgemeinen im Bereich von 0,001 bis 5 Gew.-%.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäßen thermoplastischen Formmassen zeichnen sich durch ein ausgewogenes Eigenschaftsspektrum aus und zeigen eine sehr gute thermische Beständigkeit, welche bei der Verarbeitung geringen Formbelag und Verfärbungen zeigen. Daher eignen sich derartige Formteile insbesondere zur Anwendung als Formkörper wie Kettenglieder, Gleitrollen, Gleitschienen oder Zahnräder.

### Beispiele

Es wurden folgende Komponenten eingesetzt:

### Komponente A)

Polyoxymethylencopolymerisat aus 97 Gew.-% Trioxan und 3 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen MVR von 6 ml/10 min (190°C, 2,16 kg, nach ISO 1133/B)

### Komponente B)

Irganox® 245 der Firma Ciba Geigy:

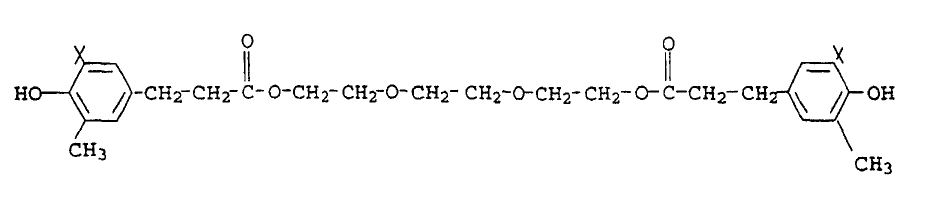

### Komponente C)

Polyamid-Oligomeres mit einem Molekulargewicht von etwa 3000, hergestellt aus Caprolactam, Hexamethylendiamin, Adipinsäure und Propionsäure (als Molekulargewichtsregler) in Anlehnung an die Beispiele 5-4 der US-A 3 960 984 ("PA-dicapped").

### Komponente D)

Synthetisches Mg-Silicat (Ambosol® Firma Societe Nobel, Puteaux) mit folgenden Eigenschaften:

| | |
|---|---|
| Gehalt an MgO | ≥14,8 Gew.-% |
| Gehalt an SiO2 | ≥ 59 Gew.-% |
| Verhältnis Sio2:MgO | 2,7 mol/mol |
| Schüttdichte | 20 bis 30 g/100m |
| Glühverlust: | < 25 Gew.-% |

### Komponenten E)

- E1:: Loxiol®VP 1206 der Firma Henkel KGaA (Glycerindistearat)
- E2:: Loxiol®EP 728 der Firma Henkel KGaA (Polyolfettsäureester)
- E3:: Lutensol®AT 50 der Firma BASF (RO(CH₂CH₂)ₓH; R=gesättigter linearer C₁₆-C₁₈ Fettalkohol) x=50
- E4:: Syntewax der Firma Henkel KGaA (Ethylendiamindistearat)

### Komponente F)

Ein Melamin-Formaldehyd-Kondensat gemäß Beispiel 1 der DE-A 25 40 207.

Zur Herstellung der Formmassen wurde die Komponente A mit den in der Tabelle angegebenen Mengen der Komponenten B bis F in einem Trockenmischer bei einer Temperatur von 23°C gemischt. Die so erhaltene Mischung wurde in einem Doppelschneckenextruder mit Entgasungsvorrischtung (ZSK 25 der Firma Werner & Pfleiderer) eingebracht, bei 230°C homogenisiert, entgast und das homogenisierte Gemisch durch eine Düse als Strang ausgepreßt und granuliert.

Zur Prüfung der Thermostabilität wurden bestimmt:
- GV N₂:: Der Gewichtsverlust in Prozent einer Probe aus 1,2 g Granulat bei 2-stündigem Erhitzen auf 220°C unter Stickstoff,
- GV Luft:: Gewichtsverlust in Prozent einer Probe aus 1,2 g Granulat bei 2-stündigem Erhitzen auf 220°C unter Luft.

Der MVR wurde gemäß ISO 1133/B bestimmt.

Die Zusammensetzungen der Formmassen und die Ergebnisse der Messungen sind der Tabelle zu entnehmen.

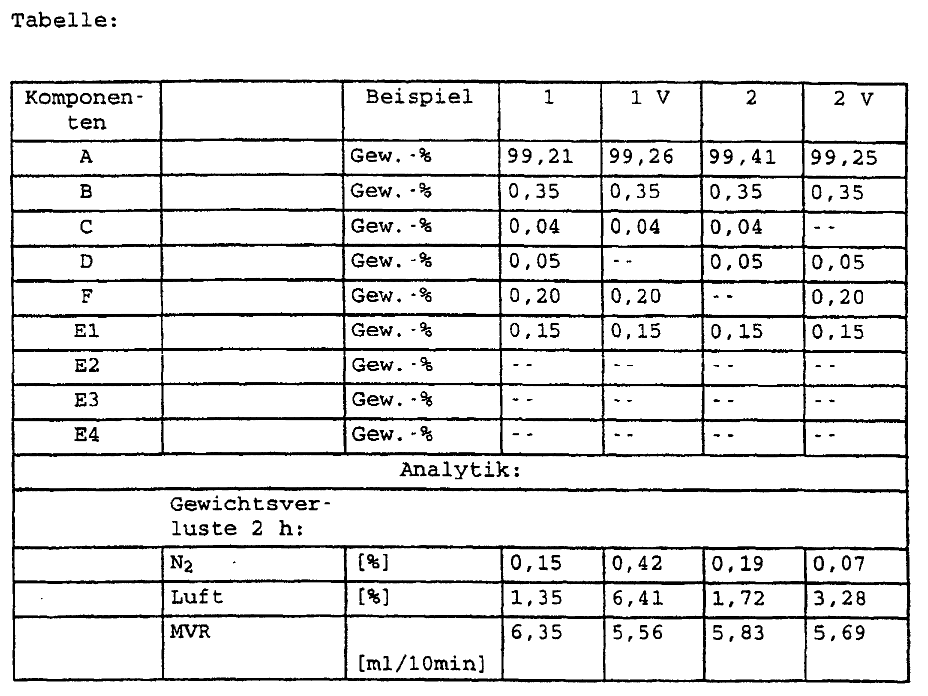

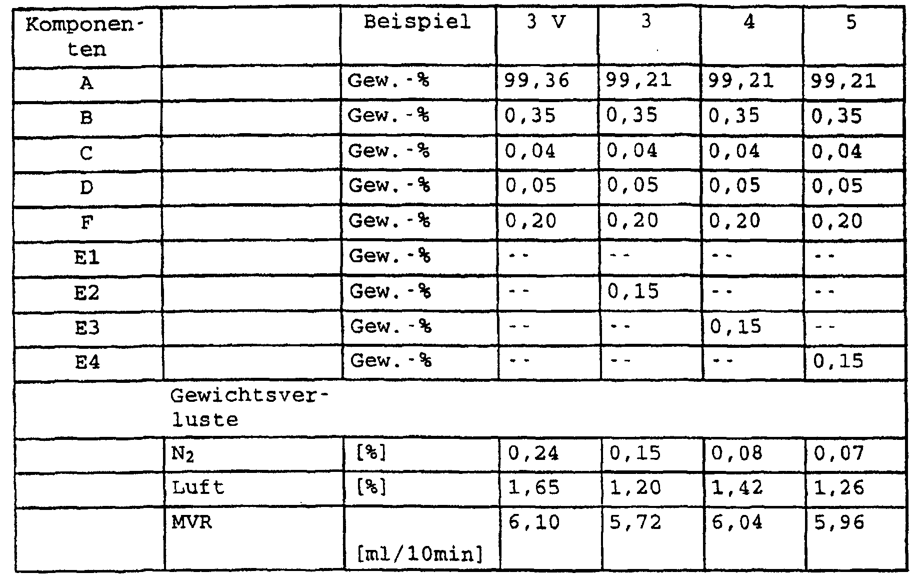

## Patentansprüche

1. Thermoplastische Polyoxymethylen-Formmassen, enthaltend
A) 10 bis 99,98 Gew.-% eines Polyoxymethylenhomo- oder copolymerisats
B) 0,005 bis 2 Gew.-% eines sterisch gehinderten Phenols
C) 0,001 bis 2 Gew.-% eines Polyamids
D) 0,002 bis 2 Gew.-% eines Erdalkalisilikates oder eines Erdalkaliglycerophosphates
E) 0,01 bis 5 Gew.-% mindestens eines Esters oder Amids gestättigter oder ungesättigter aliphatischer Carbonsäuren mit 10 bis 40 C-Atomen mit Polyolen oder aliphatischen gesättigten Alkoholen oder Aminen mit 2 bis 40 C-Atomen oder einem Ether, der sich von Alkoholen und Ethylenoxid ableitet,
F) 0 bis 5 Gew.-% eines Melamin-Formaldehyd-Kondensates
G) 0 bis 74 Gew.-% weiterer Zusatzstoffe, wobei die Summe der Gewichtsprozente der Komponenten A) bis G) jeweils 100 % ergibt.

2. Thermoplastische Formmassen nach Anspruch 1, in denen als Komponente B) ein sterisch gehindertes Phenol mit nicht mehr als einer sterisch gehinderten Gruppe in ortho-Stellung zur phenolischen Hydroxygruppe eingesetzt wird.

3. Thermoplastische Formmassen nach Ansprüchen 1 oder 2, in denen die Komponente F) aus einem feinteiligen, vernetzten, wasserunlöslichen Fällungspolykondensat aus Formaldehyd und Melamin im Molverhältnis 1,2 : 1 bis 10:1 aufgebaut ist.

4. Thermoplastische Formmassen nach den Ansprüchen 1 bis 3, in denen die Komponente E) aus Ethylendiamindistearat, Glycerindistearat, Polyetherpolyolfettsäureestern, Polyesterpolyolfettsäureestern oder einem Ether der allgemeinen Formel
RO (CH₂ CH₂ O)ₙ H
in der R eine Alkylgruppe mit 6 bis 40 Kohlenstoffatomen und n eine Zahl größer/gleich 1 bedeutet.

5. Thermoplastische Formmassen nach den Ansprüchen 1 bis 4, in denen als Komponente D) Erdalkalimetallsilikate der allgemeinen Formel
Me · x SiO₂ · n H₂O
eingesetzt werden, wobei
Me ein Erdalkalimetall
x eine Zahl von 1,4 bis 10 und
n eine Zahl gleich oder größer als 0,
bedeuten.

6. Thermoplastische Formmassen nach den Ansprüchen 1 bis 5 enthaltend 0,001 bis 5 Gew.-% Komponente F).

7. Verwendung der thermoplastischen Formmassen gemäß den Ansprüchen 1 bis 6 zur Herstellung von Fasern, Folien und Formkörpern.

8. Formkörper, hergestellt aus den thermoplastischen Formmassen gemäß den Ansprüchen 1 bis 6.

## Claims

1. A thermoplastic polyoxymethylene molding material containing, as essential components,
A) from 10 to 99.98% by weight of a polyoxymethylene homo- or copolymer
B) from 0.005 to 2% by weight of a sterically hindered phenol
C) from 0.001 to 2% by weight of a polyamide
D) from 0.002 to 2% by weight of an alkaline earth metal silicate or of an alkaline earth metal glycerophosphate
E) from 0.01 to 5% by weight of at least one ester or amide of saturated or unsaturated aliphatic carboxylic acids of 10 to 40 carbon atoms with polyols or aliphatic saturated alcohols or amines of 2 to 40 carbon atoms or an ether which is derived from alcohols and ethylene oxide
F) from 0 to 5% by weight of a melamine/formaldehyde condensate
G) from 0 to 74% by weight of further additives, the sum of the percentages by weight of the components A) to G) being 100% in each case.

2. A thermoplastic molding material as claimed in claim 1, in which a sterically hindered phenol having not more than one sterically hindered group in the ortho position relative to the phenolic hydroxyl group is used.

3. A thermoplastic molding material as claimed in claim 1 or 2, in which component F) is composed of a finely divided, crosslinked, water-insoluble precipitated polycondensate of formaldehyde and melamine in a molar ratio of 1.2:1 to 10:1.

4. A thermoplastic molding material as claimed in any of claims 1 to 3, in which component E) consists of ethylenediamine distearate, glyceryl distearate, polyetherpolyol fatty esters, polyesterpolyol fatty esters or an ether of the formula
RO(CH₂CH₂O)ₙH
where R is alkyl of 6 to 40 carbon atoms and
n is greater than or equal to 1.

5. A thermoplastic molding material as claimed in any of claims 1 to 4, in which an alkaline earth metal silicate of the formula
Me · x SiO₂ · n H₂O
where
Me is an alkaline earth metal
x is from 1.4 to 10 and
n is greater than or equal to 0,
is used as component D).

6. A thermoplastic molding material as claimed in any of claims 1 to 5, containing from 0.001 to 5% by weight of component F).

7. The use of a thermoplastic molding material as claimed in any of claims 1 to 6 for the production of fibers, films and moldings.

8. A molding produced from a thermoplastic molding material as claimed in any of claims 1 to 6.

## Revendications

1. Matières de moulage à base de polyoxyméthylène thermoplastiques, contenant
A) 10 à 99,98 % en poids d'un homo- ou copolymère de polyoxyméthylène
B) 0,005 à 2 % en poids d'un phénol empêché stériquement
C) 0,001 à 2 % en poids d'un polyamide
D) 0,002 à 2 % en poids d'un silicate alcalino-terreux ou d'un glycérophosphate alcalino-terreux
E) 0,01 à 5 % en poids d'au moins un ester ou amide d'acides carboxyliques aliphatiques, saturés ou insaturés, ayant 10 à 40 atomes de carbone avec des polyols ou des alcools saturés aliphatiques ou des amines ayant 2 à 40 atomes de carbone ou un éther, qui dérivé d'alcools et d'oxyde d'éthylène
F) 0 à 5 % en poids d'un condensat mélamine-formaldéhyde
G) 0 à 74 % en poids d'autres additifs,
tandis que la somme des pourcentages des composants A) à G) vaut à chaque fois 100 %.

2. Matières de moulage thermoplastiques selon la revendication 1, dans lesquelles on utilise comme composant B) un phénol empêché stériquement n'ayant pas plus d'un groupe empêché stériquement en position ortho du groupe hydroxy phénolique.

3. Matières de moulage thermoplastiques selon la revendication 1 ou 2, dans lesquelles le composant F) est élaboré à partir d'un polycondensat précipité insoluble dans l'eau, réticulé, finement pulvérisé, de formaldéhyde et de mélamine dans le rapport molaire de 1,2:1 à 10:1.

4. Matières de moulage thermoplastiques selon les revendications 1 à 3, dans lesquelles le composant E) est composé de distéarate d'éthylènediamine, de distéarate de glycérine, d'esters de polyétherpolyol et d'acide gras, d'esters de polyesterpolyol et d'acide gras, ou d'un éther de formule générale
RO (CH₂ CH₂ O)ₙ H
dans laquelle R désigne un groupe alkyle ayant 6 à 40 atomes de carbone et n représente un nombre supérieur/égal à 1.

5. Matières de moulage thermoplastiques selon les revendications 1 à 4, dans lesquelles on utilise comme composant D) des silicates de métal alcalino-terreux de formule générale
Me · x SiO₂ · n H₂O
où
Me désigne un métal alcalino-terreux
xreprésente un nombre de 1,4 à 10 et
nreprésente un nombre égal ou supérieur à 0.

6. Matières de moulage thermoplastiques selon les revendications 1 à 5, contenant 0,001 à 5 % en poids de composant F).

7. Utilisation des matières de moulage thermoplastiques selon les revendications 1 à 6 pour la préparation de fibres, feuilles et corps moulés.

8. Corps moulé, préparé à partir des matières de moulage thermoplastiques selon les revendications 1 à 6.
